(19) Europäisches Patentamt
European Patent Office
Office européen des brevets

(11) Veröffentlichungsnummer: **0 348 635**
**A2**

(12) **EUROPÄISCHE PATENTANMELDUNG**

(21) Anmeldenummer: **89107966.7**

(51) Int. Cl.[4]: **C07F 7/18**

(22) Anmeldetag: **03.05.89**

(30) Priorität: **28.06.88 DE 3821670**

(43) Veröffentlichungstag der Anmeldung:
**03.01.90 Patentblatt 90/01**

(84) Benannte Vertragsstaaten:
**AT BE DE ES FR GB IT NL**

(71) Anmelder: **HÜLS AKTIENGESELLSCHAFT**
**Patentabteilung / PB 15 - Postfach 13 20**
**D-4370 Marl 1(DE)**

(72) Erfinder: **Zerpner, Dieter, Dr.**
**Neulandstrasse 110**
**D-4370 Marl(DE)**
Erfinder: **Haag, Horst Günter, Dr.**
**Wellerfeldweg 219**
**D-4370 Marl(DE)**

(54) **Haftvermittler für vulkanisierbare Mischungen aus ungesättigten Kautschuken und siliciumhaltigen Füllstoffen.**

(57) Die bisher als Haftvermittler weitgehend eingesetzten "Tetrasulfane" haben den Nachteil, daß sie hochdispersen Kieselsäuren in erheblichen Mengen zugesetzt werden müssen, um zu Vulkanisaten mit guten gummitechnologischen Eigenschaften zu führen. Außerdem ist die Herstellung dieser Haftvermittler nicht unproblematisch.

Die erfindungsgemäßen Haftvermittler führen bei niedrigerer Dosierung als die "Tetrasulfane" unter Verwendung der in der Kautschukverarbeitung üblichen Zusatzstoffen zu vergleichbaren gummitechnologischen Werten, beim Einsatz gleicher Mengen werden teilweise bessere gummitechnologische Ergebnisse erzielt. Hergestellt werden diese Haftvermittler auf sicherheitstechnisch weniger anspruchsvollem Wege.

Eingearbeitet werden die erfindungsgemäßen Haftvermittler in helle oder farbige Vulkanisate.

EP 0 348 635 A2

# Haftvermittler für vulkanisierbare Mischungen aus ungesättigten Kautschuken und siliciumhaltigen Füllstoffen

Die bisher wichtigsten verstärkenden Füllstoffe für olefinisch ungesättigte Kautschuke sind aktive Ruße mit großer Oberfläche.

Der Austausch von Ruß gegen siliciumhaltige Füllstoffe vergleichbar großer Oberfläche ist wirtschaftlich interessant für die Herstellung von hellen oder farbigen Vulkanisaten. Die Weiterreißfestigkeit der so hergestellten Vulkanisate wird zwar verbessert, alle anderen gummitechnologischen Eigenschaften verschlechtern sich jedoch deutlich.

Es ist bekannt, diesen Mangel durch den Zusatz eines sogenannten Haftvermittlers mehr oder weniger auszugleichen. Dem Haftvermittler kommt dabei die Aufgabe zu, für den Verbund zwischen der hydrophilen (siliciumhaltiger Füllstoff) und der hydrophoben (ungesättigter Kautschuk) Mischungskomponente zu sorgen. Als besonders gute Haftvermittler haben sich dafür organofunktionelle Silane erwiesen, die mittels reaktiver siliciumhaltiger Gruppen Siloxanbindungen mit dem siliciumhaltigen Füllstoff und mittels schwefelhaltiger Gruppen während der Vulkanisation Schwefel-Bindungen mit dem Kautschuk eingehen (vgl. Ullmanns Encyklopädie der technischen Chemie, Band 21, Seite 498, Verlag Chemie, 4. Auflage).

Ein bekannter Haftvermittler ist 3-Mercaptopropyltriethoxysilan. Nachteilig ist die bei seiner Handhabung auftretende Geruchsbelästigung (Flüchtigkeit).

Man ist daher dazu übergegangen, Haftvermittler einzusetzen, die diesen Nachteil überwinden und durch die folgende Formel charakterisiert sind:

$(RO)_3Si - Y - S_X - Y - Si(OR)_3$, mit

R = Methyl und/oder Ethyl,

X = 2 bis 6, üblicherweise etwa 4 und

Y = zweiwertiger gesättigter Kohlenwasserstoffrest mit 1 bis 5 C-Atomen mit gerader oder verzweigter C-Kette, die gegebenenfalls durch - O -, - S - oder - NH - unterbrochen ist (DE-AS 27 12 866)

bzw.

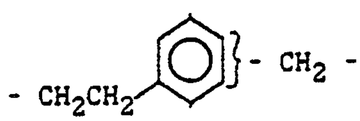

oder

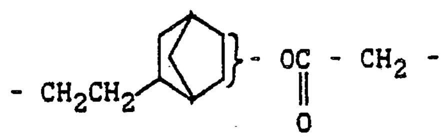

(EP-A1-0 191 929)

Da die Haftvermittler der zuletzt genannten Art im Durchschnitt 4 Schwefelatome enthalten, bezeichnet man sie als "Tetrasulfane".

Der ihnen noch anhaftende Nachteil besteht in erster Linie darin, daß sie vor allem zusammen mit hochdispersen Kieselsäuren in nicht unerheblichen Mengen eingesetzt werden müssen, um Spannungswerte (z. B. bei 300 % Dehnung) zu erhalten, die gegenüber einem haftvermittlerfreien Vergleichsvulkanisat um ein Mehrfaches verbessert sind. Außerdem wird zur Synthese eines "Tetrasulfans" wasserfreies $Na_2S_4$ benötigt, dessen Herstellung wegen des Einsatzes von metallischem Natrium nicht unproblematisch ist.

Aufgabe der Erfindung war es nun, Haftvermittler herzustellen, die einmal auf sicherheitstechnisch weniger anspruchsvollem Wege hergestellt werden können, zum anderen bereits in kleineren Mengen zu den gewünschten gummitechnologischen Verbesserungen führen oder bei gleicher Dosierung wie die "Tetrasulfane" bestimmte Prüfwerte der Vulkanisate erheblich verbessern.

Diese Aufgabe wurde überraschenderweise durch die in den Patentansprüchen beschriebene Maßnahme gelöst.

Überraschend deswegen, weil es nicht zu erwarten war, daß das erfindungsgemäße Reaktionsgemisch, das eine bisher nicht bekannte Kombination von funktionellen Gruppen enthält, zu Vulkanisaten mit zum Teil sehr guten gummitechnologischen Eigenschaften führt.

Die als Ausgangsprodukt dienenden 2(3)-Chloracetoxy-5-(2′-trialkoxysilylethyl)-norbornane der allgemeinen Formel

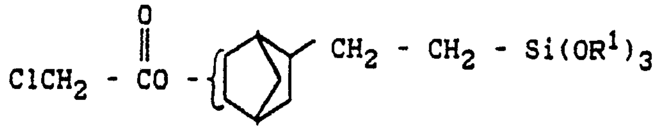

(I)

mit $R^1$ = Methyl und/oder Ethyl
können aus dem Handelsprodukt 5-Vinylnorborn-2-en in einem zwei- bzw. dreistufigen Verfahren hergestellt werden.

Die erste Stufe stellt in jedem Fall die selektive Anlagerung von Chloressigsäure an die cyclische Doppelbindung des 5-Vinylnorborn-2-ens unter Bildung eines Isomerengemisches [2(3)-Chloracetoxy-5-vinylnorbornan] dar.

Bei dem zweistufigen Verfahren erfolgt anschließend die Umsetzung mit dem Trimeth- und/oder Triethoxysilan zu dem Ester der allgemeinen Formel I.

Bei dem dreistufigen Verfahren wird das 2(3)-Chloracetoxy-5-vinyl-norbornan-Isomerengemisch zunächst mit Trichlorsilan umgesetzt. Anschließend erfolgt dann in dritter Stufe die Substitution des Chlors durch die Methoxy- oder Ethoxygruppe durch Zugabe des entsprechenden Alkohols in Gegenwart eines tertiären Amins, das den entstehenden Chlorwasserstoff abfangen soll und zweckmäßigerweise in geringem molarem Überschuß (1 : 1 bis 1 : 1,2) eingesetzt wird.
Prinzipiell sind auch andere bekannte Verfahren zur Umwandlung der Trichlorsilylgruppe in die Trialkoxysilylgruppe geeignet, z. B. die Umsetzung mit entsprechenden Orthoestern oder Alkoholaten, bei denen ein Aminzusatz unterbleibt.

Die zur Synthese der erfindungsgemäßen Haftvermittler benötigten thiosulfonsauren Salze der allgemeinen Formel
$R^2 - SO_2SMe$ (II),
in der $R^2$ ein (cyclo)aliphatischer oder aromatischer Kohlenwasserstoffrest mit bis zu 20 C-Atomen und Me Natrium oder Kalium ist, sind grundsätzlich bekannt. Sie können z. B. durch Umsetzung des entsprechenden Sulfonsäurechlorids mit Natriumsulfid in wäßriger oder alkoholischer Lösung oder durch Schwefelung des entsprechenden sulfinsauren Salzes in einem Amin hergestellt werden (Houben-Weyl-Müller, Band E11/Teil 2, Seite 1112; Methodicum Chimicum, Band 7, Seite 730, G. Thieme Verlag, Stuttgart, 1976).

Zur Herstellung der erfindungsgemäßen Haftvermittler werden die Verbindungen der allgemeinen Formeln I und II gemäß einem grundsätzlich bekannten Veresterungsverfahren in Gegenwart eines Lösemittels (vorzugsweise Methanol oder Ethanol) umgesetzt (Houben-Weyl-Müller, Band E11/Teil 2, Seite 1118; Methodicum Chimicum, Band 7, Seite 732, G. Thieme Verlag, Stuttgart, 1976). Weitere geeignete Lösemittel sind z. B. Dimethylformamid, Dimethylacetamid und N-Methylpyrrolidon.

Die Umsetzung erfolgt im allgemeinen bei Temperaturen von 50 bis 100 °C, vorzugsweise 60 bis 80 °C. Beim Einsatz von Methanol oder Ethanol empfiehlt es sich, die Umsetzung beim Siedepunkt des eingesetzten Alkohols durchzuführen.

Am Ende der Reaktion wird das Lösemittel so weit wie möglich abgezogen und das Produkt vom als Nebenprodukt anfallenden Natrium- oder Kaliumchlorid durch Auswaschen mit geeigneten Lösemitteln, wie z. B. Toluol, Cyclohexan, Diethylether oder Methyl-tert.-butylether, getrennt.

Ein besonderer Vorteil der so gewonnenen Haftvermittler besteht darin, daß sie vor der Einarbeitung nicht weiter aufgetrennt werden müssen, sondern als rohes, von Lösemitteln und anorganischen Nebenprodukten befreites Produkt eingesetzt werden können.

Geeignete Kautschuke für die Herstellung von vulkanisierbaren Mischungen auf der Basis der erfindungsgemäßen Haftvermittler sind beispielsweise Styrol-Butadien-Kautschuk (SBR), Naturkautschuk (NR), Polyisoprenkautschuk (IR), Polybutadienkautschuk (BR), Acrylnitril-Butadien-Kautschuk (NBR), Ethylen-α-Olefin-(Dien)- Kautschuk [EP(D)M], Butyl kautschuk (IIR), und Polyalkenylen-Kautschuk, wie Polypentenylen-, Polyoctenylen- oder Polydodecenylen-Kautschuk.

Als Zusatzstoff in den vulkanisierbaren Mischungen können die in der Kautschuktechnik üblichen Weichmacheröle eingesetzt werden. Bevorzugt sind aromatische, alipahtische und naphthenische Kohlenwasserstoffe. Sie können in üblichen Mengen zugesetzt werden.

Als Zusatzstoff können auch weitere übliche Hilfsmittel, wie beispielsweise Zinkoxid, Stearinsäure, Harzsäuren, Alterungsschutzmittel und Ozonschutzwachse, in üblichen Mengen zugesetzt werden.

Der aktive, verstärkende Füllstoff besteht in der Regel aus größer/gleich 10, insbesondere größer/gleich 30 Massen-% eines hochdispersen Füllstoffs aus der Gruppe der Kieselsäuren, Silikate und ihrer Gemische, der mit dem Haftvermittler in Gegenwart der Kautschukkomponente (in situ) behandelt (beschichtet) ist, und kleiner/gleich 90, insbesondere kleiner/gleich 70 Massen-% anderen aktiven, verstärkenden Füllstoffen (Haftvermittler + Kieselsäuren und/oder Silikate = Menge des in situ behandelten Füllstoffs).

Die Oberfläche des Füllstoffs vor der Behandlung ist in der Regel 30 bis 500, insbesondere 35 bis 300 $m^2/g$, bestimmt durch Stickstoffadsorption nach BET. Die Menge des Haftvermittlers ist in der Regel 0,5 bis 10, insbesondere 1 bis 6 Massen-%, bezogen auf den unbehandelten Füllstoff (Kieselsäuren, Silikate).

Die erfindungsgemäßen Haftvermittler können in der kautschukverarbeitenden Industrie z. B. im Innenmischer oder nachträglich auf der Walze, zweckmäßigerweise vor dem aus Schwefel und den üblichen Beschleunigern bestehenden Vulkanisationssystem, eingearbeitet werden. Durch die Wahl der Art und Menge der Vulkanisationsbeschleuniger sowie der Menge an Schwefel und/oder Schwefelspender können Vernetzungsdichte und Vulkanisationsgeschwindigkeit wie üblich in weiten Grenzen variiert werden.

Die Erfindung wird anhand der nachfolgenden Beispiele näher erläutert. Dabei bedeuten, wenn nicht anders angegeben, alle %-Angaben Massenpro zente, M die relative Molekülmasse und Mn die zahlenmittlere, relative Molekülmasse. Die Molekülmassen werden dampfdruckosmometrisch bestimmt. Bei angegebenen Teilmengen handelt es sich um Massenteile. HPLC steht als Abkürzung für Hochdruckflüssigkeitschromatographie.

Herstellung von 2(3)-Chloracetoxy-5-vinyl-norbornan

In einem 3-Halskolben mit Innenthermometer, Rührer und Rückflußkühler wurden unter trockenem Stickstoff 720 g 5-Vinyl-norborn-2-en (gaschromatographische Reinheit größer/gleich 98 %), 842 g Chloressigsäure und 450 ml trockenes Xylol auf 140 °C erhitzt, wobei die leicht exotherme Reaktion bei ca. 120 °C einsetzte. Die Temperatur des Reaktionsgemisches wurde noch zwei Stunden auf 140 °C gehalten, nach dem Abkühlen die überschüssige Chloressigsäure durch Lösen in Wasser abgetrennt und die organische Phase mit wäßriger Natriumbicarbonat-Lösung und Wasser neutral gewaschen. Nach dem Trocknen über Calciumchlorid ergab die Destillation im Vakuum 928 g (72 % der Theorie) einer farblosen Flüssigkeit ($n_D^{20}$ : 1,4951). Die angegebene Struktur (Isomerengemisch) wurde durch NMR- und GC-Analysen bestätigt.

Herstellung von 2(3)-Chloracetoxy-5-(2′-triethoxysilylethyl)-norbornan

429 g 2(3)-Chloracetoxy-5-vinyl-norbornan wurden mit 0,1 ml einer Lösung von 200 mg Hexachlorplatinwasserstoffsäure in 10 ml Tetrahydrofuran in einem 3-Halskolben mit Innenthermometer, Rührer, Rückflußkühler und Tropftrichter unter trockenem Stickstoff auf 80 °C erwärmt und anschließend 220 ml Trichlorsilan innerhalb von 30 Minuten zugetropft, wobei die Temperatur der exothermen Reaktion durch Kühlung auf 80 °C gehalten wurden. Nach der vollständigen Zugabe des Trichlorsilans wurde das Reaktionsgemisch noch 1,5 Stunden auf 80 °C gehalten und danach leichtflüchtige Anteile im Vakuum abdestillilert.

Das erhaltene Reaktionsprodukt 2(3)-Chloracetoxy-5-(2′-trichlorsilylethyl)-norbornan der Formel I mit $-SiCl_3$ statt $-Si(OR^1)_3$ wurde über einen Tropftrichter unter trockenem Stickstoff einem stark gerührten Gemisch aus 2 l Ethanol und 120 ml Triethylamin zugesetzt. Die Temperatur der Reaktionsmischung wurde dabei durch Kühlung zwischen 10 bis 15 °C gehalten, während gleichzeitig weitere 956 ml Triethylamin so zugetropft wurden, daß die Zugabe beider Flüssigkeiten gleichzeitig nach ca. 30 Minuten beendet war. Anschließend wurde weitere 60 Minuten ohne Kühlung gerührt, das ausgefallene Salz (Aminhydrochlorid) abgesaugt und zweimal mit 800 ml trockenem Toluol gewaschen. Die Filtrate wurden nach Abdestillieren der Lösemittel am Rotationsverdampfer mit 200 $cm^3$ trockenem Toluol versetzt, das ausgefallene Salz abgesaugt, mit Toluol gewaschen und das Filtrat vom Toluol befreit. Es wurden 710 g (94 % der Theorie) eines Rohproduktes ($n_D^{20}$ : 1,4656) erhalten, das nach Destillation im Vakuum 612 g (81 % der Theorie) einer farblosen Flüssigkeit ($n_D^{20}$ ; 1,4621) ergab. Die angegebene Struktur (Isomerengemisch) wurde durch NMR- und GC-Analysen bestätigt.

Herstellung von 2(3)-Chloracetoxy-5-(2′-trimethoxysilylethyl)-norbornan

Die vorstehende Vorschrift wurde in der Weise abgeändert, daß das Ethanol durch Methanol ersetzt wurde. Es wurden 598 g (89 % der Theorie) eines Rohproduktes ($n_D^{20}$ : 1,4720) erhalten, das nach Destillation im Vakuum 530 g (79 % der Theorie) einer farblosen Flüssigkeit ($n_D^{20}$ : 1,4700) ergab.

Herstellung von Natrium-benzolthiosulfonat

Ausführung a

126,6g $Na_2S \cdot x\ H_2O$ (60 bis 62 Gewichtsprozent $Na_2S$) wurden unter trockenem Stickstoff in 2 l technisch absolutem Ethanol bei 25 °C unter Rühren weitgehend gelöst und 173,6 g Benzolsulfochlorid so zugetropft, daß sich die Reaktionsmischung auf Siedetemperatur erhitzte und ein schwacher Rückfluß während der Zugabe bestehen blieb. Danach wurde noch 30 Minuten auf Rückflußtemperatur gehalten, die Reaktionsmischung abgekühlt, das ausgeschiedene Kochsalz abgesaugt, mit Ethanol gewaschen und die Filtrate am Rotationsverdampfer im Vakuum zur Trockne eingeengt. Nach dem Trocknen im Vakuumtrokkenschrank (50 °C, 20 mbar, Trockenmittel KOH) betrug das Gewicht des weißen Salzes 194,0 g und enthielt nach HPLC durchschnittlich 85 % Natriumbenzolthiosulfonat.

Ausführung b

$Na_2S \cdot x\ H_2O$ (60 bis 62 Gewichtsprozent $Na_2S$) wurde am Wasserauskreiser unter trockenem Stickstoff mittels Xylol entwässert, das Xylol abdekantiert, der Rückstand wie unter (a) beschrieben gelöst und mit Benzolsulfochlorid umgesetzt. Nach einer HPLC-Analyse zur Bestimmung des Gehaltes an Thiosulfonat wurde die Reaktionsmischung, ohne das entstandene Kochsalz abzutrennen, in der folgenden Stufe eingesetzt.

Ausführung c

Umsetzung von Natrium-benzolsulfinat mit Schwefel (Synthesis 1980, Seite 615). Gehalt an Natrium-benzolthiosulfonat größer/gleich 97 %.

Die übrigen Natrium- bzw. Kalium-thiosulfonate sind in gleicher Weise aus den entsprechenden Sulfochloriden bzw. Metall-sulfinaten zugänglich.

Herstellung der erfindungsgemäßen Haftvermittler

Beispiel 1

In einem 3-Halskolben mit Innenthermometer, Rührer, Rückflußkühler und Tropftrichter wurden unter trockenem Stickstoff 47,5 g (85%ig; 0,206 Mol, bezogen auf 100 % reines Produkt) Natrium-benzolthiosulfonat in 400 ml trockenem Ethanol bei Rückflußtemperatur weitgehend gelöst und anschließend 75,7 g (0,2 Mol; 97%ig) 2(3)-Chloracetoxy-5-(2′-triethoxysilylethyl)-norbornan innerhalb von 5 Minuten zugetropft. Die Reaktionsmischung wurde noch 2 Stunden unter Rückfluß erhitzt, nach dem Abkühlen das ausgefallene Natriumchlorid abgetrennt und mit Ethanol gewaschen. Die vereinigten Filtrate wurden am Rotationsverdampfer unter vermindertem Druck vom Ethanol befreit, der Rückstand in trockenem Diethylether aufgenommen, von unlöslichen Anteilen abfiltriert und der Ether entsprechend dem Ethanol entfernt.
Ausbeute: 95,6 g eines orangefarbenen, flüssigen Reaktionsproduktes

| | | |
|---|---|---|
| $n_D^{20}$ : 1,523<br>C/H/S/Si: | ber. % 53,49/6,98/12,40/5,43 | $M_n$ = 516 |
| | gef. % 53,24/6,64/11,3 /5,62 | $M_n$ = 680 |

Beispiele 2 bis 8

Die Herstellung der in Tabelle 1 zusammengestellten Produkte erfolgte analog Beispiel 1. Bei der Umsetzung von 2(3)-Chloracetoxy-5-(2′-trimethoxysilylethyl)-norbornan wurde Ethanol durch Methanol ersetzt.

Herstellung der Kautschukmischungen

(a) Grundmischung

In einem Innenmischer wurden folgende Komponenten gemischt. Die Temperatur stieg dabei bis auf ca. 140 °C.

| | Teile |
|---|---|
| Kautschuk (SBR 1502) | 100 |
| Zinkoxid aktiv | 3 |
| Stearinsäure | 2 |
| hochdisperse, gefällte Kieselsäure (Oberfläche: 170 $m^2/g$, bestimmt durch $N_2$-Adsorption nach BET) | 50 |
| Alterungsschutzmittel (Gemisch aralkylierter Phenole) | 1 |
| Dispergiermittel (Polyethylenglykol, $M_n$ = 4 000) | 2 |

(b) Vulkanisationsmischungen

Auf einer Walze wurden der Grundmischung bei 50 °C folgende Komponenten zugesetzt:

| | |
|---|---|
| Haftvermittler (siehe Tabelle 2) | variabel |
| Dibenzothiazyldisulfid | 1 |
| Diphenylguanidin | 2 |
| Schwefel | 2 |

Die Herstellung der vulkanisierten Probekörper erfolgte in der üblichen Weise in einer Presse bei 150 °C. Um zu vermeiden, daß etwaige Schwankungen im Vulkanisationsablauf die an den Probekörpern zu messenden Werte stark beeinflussen, wurden einheitlich die Prüfwerte nach einer Vulkanisationszeit von 25 Minuten (ca. 10 Minuten länger als $t_{90}$ entspricht) in Tabelle 2 angegeben.

**Tabelle 1**

Darstellung der erfindungsgemäßen Haftvermittler durch Umsetzung von I mit II

| Bsp. | Einsatzkomponenten II Art $R^2$ | Menge[a)] [g] | I Art $R^1$ | Menge [g] | Ausbeute [g] | Produkt $n_D^{20}$ | $M_n$ | Analysenwerte C / H / S / Si | | |
|---|---|---|---|---|---|---|---|---|---|---|
| 2 | 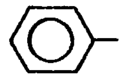 | 80,8 | $CH_3$ | 134,6 | 148,3 | 1,532 | 1540 | 50,25/6,17/13,0 /7,09 | % | gef. |
| | | | | | | | 474 | 50,63/6,33/13,50/5,91 | % | ber. |
| 3 | $(C_{12}H_{25})$— b) 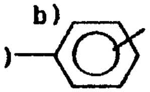 | 75,0 | $CH_3$ | 67,3 | 124,0 | 1,518 | 1420 | 58,61/8,28/ 9,50/4,52 | % | gef. |
| | | | | | | | 684 | 59,81/8,41/ 9,97/4,36 | % | ber. |
| 4 | $(C_{12}H_{25})$— b) 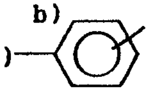 | 75,0 | $C_2H_5$ | 75,7 | 130,6 | 1,509 | 1080 | 60,06/8,43/ 9,02/3,98 | % | gef. |
| | | | | | | | 642 | 61,40/8,77/ 9,36/4,09 | % | ber. |
| 5 | $CH_3$— 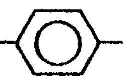 | 86,6 | $CH_3$ | 134,6 | 170,1 | 1,535 | 1080 | 51,90/6,47/12,3 /5,93 | % | gef. |
| | | | | | | | 488 | 51,64/6,56/13,11/5,74 | % | ber. |
| 6 | $CH_3$— 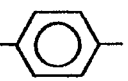 | 43,3 | $C_2H_5$ | 75,7 | 95,2 | 1,526 | 1270 | 54,13/6,89/11,7 /5,34 | % | gef. |
| | | | | | | | 530 | 54,34/7,17/12,08/5,28 | % | ber. |

Tabelle 1 - Fortsetzung

| Bsp. | Einsatzkomponenten | | | | Produkt | | | | | |
|---|---|---|---|---|---|---|---|---|---|---|
| | II | | I | | | | | | | |
| | Art $R^2$ | Menge[a)] [g] | Art $R^1$ | Menge [g] | Ausbeute [g] | $n_D^{20}$ | $M_n$ | Analysenwerte C / H / S / Si | | |
| 7 | $nC_{12}$-$H_{25}$— | 59,3 | $CH_3$ | 67,3 | 92,9 | 1,490 | 960 | 53,35/8,51/ 9,83/5,14 | % | gef. |
| | | | | | | | 566 | 55,12/8,83/11,31/4,95 | % | ber. |
| 8 | $nC_{12}$-$H_{25}$— | 59,3 | $C_2H_5$ | 75,7 | 95,5 | 1,487 | 1110 | 56,59/8,88/11,2 /5,08 | % | gef. |
| | | | | | | | 608 | 57,24/9,21/10,53/4,61 | % | ber. |

(a) berechnet für 100%iges Thiosulfonat

(b) hergestellt aus MARLON® $AS_3$ mit $C_{10}$-$C_{13}$ 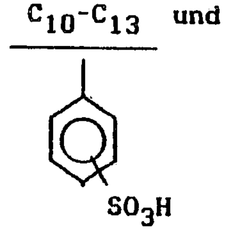 und folgender durchschnittlicher C-Zahlverteilung:

C: 10 Gew.-% 4 - 6
11 Gew.-% 43 - 49
12 Gew.-% 36 - 40
13 Gew.-% 10 - 13
14 Gew.-% kleiner/gleich 1

Gehalt an 2-Phenylalkan: 15 +/- 5 Gew.-%

Tabelle 2

| Anwendungstechnische Prüfwerte der vulkanisierten Probekörper | | | | | | | | | | |
|---|---|---|---|---|---|---|---|---|---|---|
| Haftvermittler aus Beispiel | | | A[1] | 1 | 6 | B[2] | B[2] | 1 | 6 | 3 |
| Teile | | | - | 1 | 1 | 1 | 2 | 2 | 2 | 2 |
| Zugfestigkeit | (DIN 53 504) | [MPa] | 11,5 | 15,7 | 18,1 | 12,8 | 13,2 | 17,7 | 18,1 | 17,5 |
| Reißdehnung | (DIN 53 504) | [%] | 546 | 479 | 528 | 386 | 348 | 456 | 429 | 419 |
| Spannungswert | (DIN 53 504) | [MPa] | | | | | | | | |
| bei 200 % Dehnung | | | 2,5 | 4,1 | 4,5 | 5,2 | 6,1 | 5,6 | 6,1 | 6,1 |
| bei 300 % Dehnung | | | 3,9 | 7,6 | 7,7 | 8,9 | 10,8 | 10,0 | 11,0 | 11,2 |
| Weiterreißwiderstand (interne Methode) nach Pohle | | [N/mm] | 20 | 27 | 27 | 24 | 24 | 34 | 30 | 31 |
| Shore-Härte A | (DIN 53 505) | | 65 | 67 | 67 | 70 | 72 | 69 | 69 | 68 |
| Rückprallelastizität | (ISO IR 1767) | [%] | 47 | 49 | 49 | 50 | 52 | 50 | 49 | 49 |
| Abrieb | (DIN 53 516) | [mm³] | 152 | 122 | 126 | 118 | 104 | 107 | 106 | 110 |

[1] Vergleichsmischung A enthält keinen Haftvermittler
[2] Vergleichsmischung B enthält als Haftvermittler des Standes der Technik Bis-(3-triethoxysilylpropyl)-tetrasulfan

Aus den in Tabelle 2 aufgeführten Werten geht hervor, daß die erfindungsgemäßen Haftvermittler gegenüber dem Vergleichsvulkanisat A (ohne Haftvermittlerzusatz) alle Prüfwerte stark verbessern. Gegenüber einem Haftvermittler des Standes der Technik, entsprechend den Vergleichsvulkanisaten B1 und B2, führen die erfindungsgemäßen Haftvermittler zu einer geringeren Verstrammung, da bei vergleichbaren Spannungswerten eine deutlich höhere Reißdehnung erhalten bleibt. Überraschend ist besonders die erhebliche Zunahme der Zugfestigkeit, begleitet von einem erhöhten Weiterreißwiderstand.

**Ansprüche**

1. Haftvermittler für vulkanisierbare Mischungen aus Kautschuken und mineralischen Füllstoffen, erhältlich durch Umsetzung eines 2(3)-Chloracetoxy-5-(2′-trialkoxysilylethyl)-norbornans der allgemeinen Formel

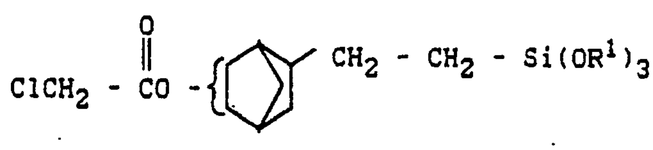

(I),

in der $R^1$ gleich Methyl und/oder Ethyl ist,

mit einem thiosulfonsauren Salz der allgemeinen Formel
$R^2 - SO_2SMe$ (II),
in der $R^2$ ein (cyclo)-aliphatischer oder aromatischer Kohlenwasserstoffrest mit bis zu 20 C-Atomen und Me Natrium oder Kalium ist, in Gegenwart eines Lösemittels bei Temperaturen bis zu 120 °C.

2. Verfahren zur Herstellung von Haftvermittlern für vulkanisierbare Mischungen aus Kautschuken und mineralischen Füllstoffen,
dadurch gekennzeichnet,
daß man ein 2(3)-Chloracetoxy-5-(2′-trialkoxysilylethyl)-norbornan der allgemeinen Formel

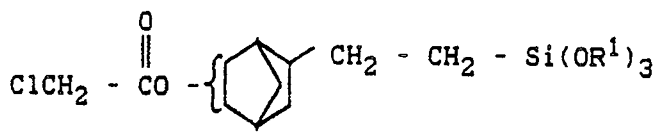

(I),

in der $R^1$ gleich Methyl und/oder Ethyl ist,
mit einem thiosulfonsauren Salz der allgemeinen Formel
$R^2 - SO_2SMe$ (II),
in der $R^2$ ein (cyclo)-aliphatischer oder aromatischer Kohlenwasserstoffrest mit bis zu 20 C-Atomen und Me Natrium oder Kalium ist, in Gegenwart eines Lösemittels bei Temperaturen bis zu 120 °C umsetzt.

3. Verfahren nach Anspruch 2,
dadurch gekennzeichnet,
daß $R^2$ der Phenylrest ist.

4. Verfahren nach den Ansprüchen 2 und 3,
dadurch gekennzeichnet,
daß Me gleich Natrium ist.